# EUROPEAN PATENT APPLICATION

(11) **EP 0 622 330 A2**
(43) Date of publication of application: **02.11.1994**
(21) Application number: 94106341.4
(22) Date of filing: 22.04.1994
(51) Int. Cl.: B66F 5/02, B60B 29/00

(54) **Combination wheel jack and trolley**

(30) Priority: 23.04.1993 ZA 932862
(71) Applicant: HUMPHRIES PROJECTS CC, Jet Park, 1459 (ZA)
(72) Inventor: Kophamel, Jeffrey, Edenvale 1610 (ZA)
(74) Representative: Patentanwälte Leinweber & Zimmermann

(57) **Abstract**

This invention relates to a combination wheel jack and trolley for use in removing and fitting wheels (10) to vehicles, especially heavy vehicles. The wheel jack and trolley has a cradle (11) which is designed to restrain a wheel (10) positioned therein, rollers (12,13,14) located on the cradle (11) to enable said wheel (10) to be rotatable, a frame to hold the frame and wheel at a desired altitude, and a means (16) to raise the wheel and cradle above the ground or substrate. The wheel jack and trolley also has trolley wheels (15) which enable the arrangement to be easily movable.

## Description

### INTRODUCTION

THIS INVENTION relates to a combination wheel jack and trolley which facilitates the removal and fitting of wheels to vehicles, particularly heavy vehicles.

### BACKGROUND TO THE INVENTION

Vehicle wheels are usually removed and fitted by hand once the vehicle has been jacked up. When changing wheels of light vehicles such as motor cars, this usually presents no difficulties for the wheels are relatively light and can be manhandled.

When changing the wheels of heavy vehicles such as large trucks, off-road tractors, earth moving vehicles and the like, the weight of the wheels presents considerable difficulties. To overcome these difficulties which include the relatively precise orientation of the wheel in relation to the wheel hub, mechanical assistance in the form of fork-lift trucks or other mechanical lifting contrivances are employed. Because such methods are often improvised, they tend to be time consuming and also present a danger to workers changing the wheel.

The term "wheel" as used in this specification and in its claims is intended to refer to a combination of a vehicle tyre and its rim and should not be confused with the term "trolley wheel" which is intended to refer to a wheel suitable for use with a trolley. In addition the term "wheel-nut" is intended to refer to an element of attachment between a wheel rim and its hub which may be a brake drum, and includes wheel-studs or bolts which are frequently used for this purpose.

### OBJECT OF THE INVENTION

It is an object of this invention to provide a combination wheel jack and trolley which facilitates the removal and fitting of wheels to vehicles, particularly heavy vehicles.

### SUMMARY OF THE INVENTION

In accordance with this invention there is provided a combination wheel jack and trolley comprising a cradle designed to restrain a wheel, a plurality of rollers attached to the cradle to allow a wheel restrained within the cradle to be rotated in use, adjustment means enabling the cradle to restrain wheels of different sizes, a supporting frame designed to hold the cradle in a desired attitude, two or more trolley wheels attached to the frame enabling the wheel jack and trolley to be movable, and a means whereby a wheel restrained by the cradle can be raised relative to the trolley wheel axle.

There is also provided for the cradle to have a handle attached thereto, the handle acting, in use, as a lever to move a wheel restrained by the cradle into its raised position; and for the handle to be foldable to a position adjacent the cradle when the combination wheel jack and trolley is transported or stored.

There is further provided for the combination wheel jack and trolley to have an hydraulic lifting means to facilitate raising a wheel restrained by the cradle relative to the trolley wheel axle; for the hydraulic lifting means to apply a lifting force to rollers located towards the operative lower side of the cradle; and for the supporting frame to have three trolley wheels one of which enables the combination wheel jack and trolley to be steered when moved.

The invention also provides for the combination wheel jack and trolley to have a prime mover to motorise the support frame and trolley wheels, and also to provide power to the hydraulic lifting means which raises a wheel restrained by the cradle.

### BRIEF DESCRIPTION OF THE DRAWINGS

Preferred embodiments of the invention will be described below by way of example only, and with reference to the accompanying drawings, in which:
- Figure 1: is a side view of a first embodiment of a combination wheel jack and trolley according to the invention with a handle in its folded position;
- Figure 2: is a side view of the embodiment of Figure 1 in use;
- Figure 3: is a front view of the embodiment of Figures 1 and 2 in use;
- Figure 4: is a side view of a second embodiment of a combination wheel jack and trolley in use; and
- Figure 5: is a front view of the embodiment of Figure 4.

### DETAILED DESCRIPTION OF THE DRAWINGS

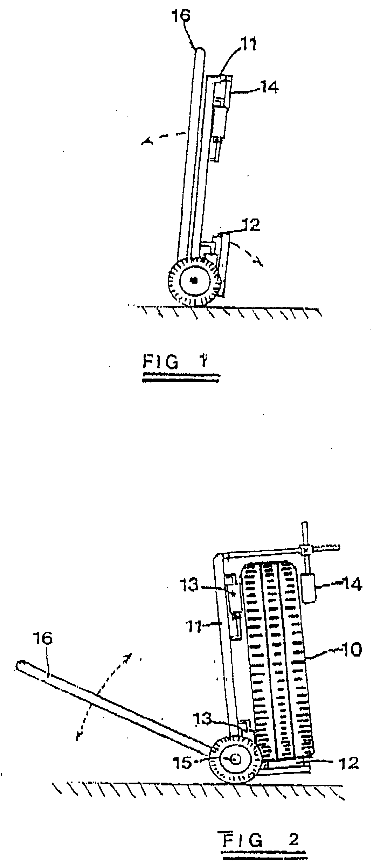

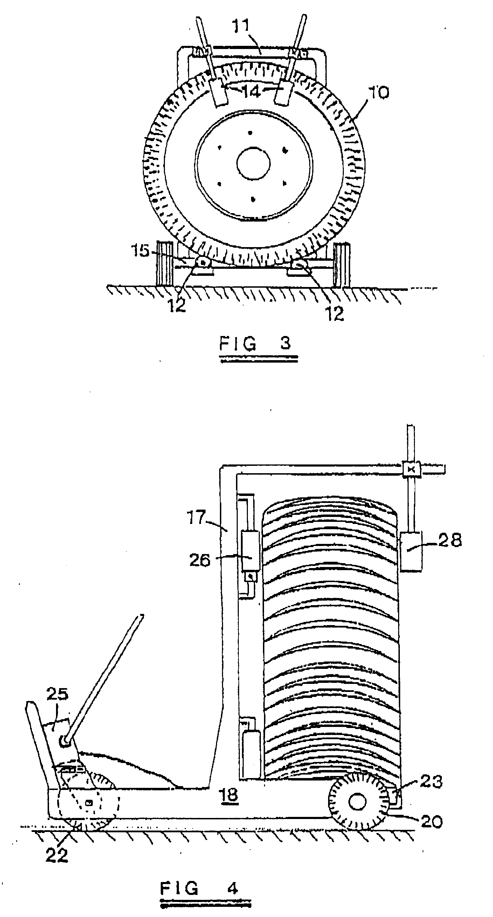

Referring to Figures 2 and 3, a wheel (10) is shown supported in the cradle (11) where two under-rollers (12) support the weight of the wheel, while four back rollers (13) (only two are visible), and two front-rollers (14), are mounted to restrain the wheel in the cradle. From the drawings it will be readily seen that the wheel thus located may be easily rotated. This provides a very simple method of aligning the mounting studs when fitting the wheel-nuts.

In use of the invention, the removal of a wheel (10) firstly requires the wheel-nuts to be slackened. The cradle is then advanced towards the wheel so that under-rollers (12) locate under the wheel as shown in Figure 3. The two front-rollers (14) are then fitted and adjusted to rest against the tyre wall.

The wheel-nuts are then removed and the cradle withdrawn and tilted backwards by putting downward pressure on the handle (16) to put the loud center over the trolley-wheel axle (15) and the whole assembly can then be wheeled away.

The procedure is reversed when fitting a wheel.

Figure 1 shows how the unit may be folded up for storage and transportation when not in use. The handle (16) and both the front-rollers (14) and under-rollers (12) may be made to fold against the cradle to make the unit more compact.

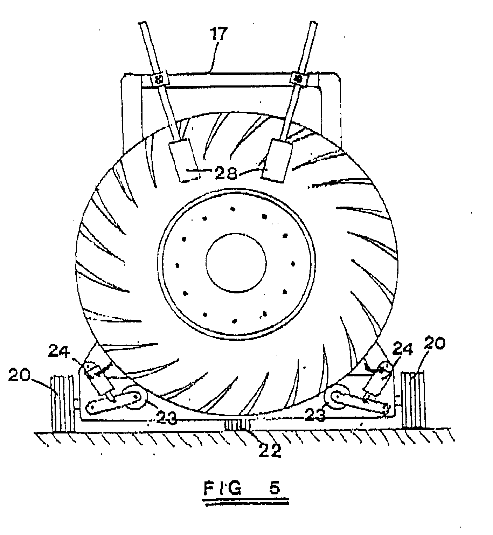

In Figures 4 and 5 a heavy-duty version of the invention is illustrated. With large wheels weighing several hundred kilograms apiece the need for hydraulic or mechanised means to lift the load becomes imperative. These drawings show a cradle (17) integral with a frame (18), the frame including two trolley-wheels (20) as before with a third trolley-wheel (22) centrally and pivotally placed to provide a steering facility. The procedure adopted to remove the large wheel entails slackening of the wheel-nuts before advancing the cradle towards the wheel with the under-rollers (23) in the lowered position. When these rollers are located beneath the wheel hydraulic cylinders (24) are pressure fed from a hand-actuated pump (25) which causes the rollers to come into contact with the wheel.

The wheel-nuts are then removed and the vertical rollers (26) and (28) are positioned to restrain the wheel before further hydraulic pressure is applied to lift the wheel and withdraw it from the brakedrum.

The under-rollers (23) are raised further to lift the wheel well clear of the ground and allow the unit with the loaded wheel to be totally withdrawn and moved to the workplace for detailed inspection, repairs and/or tyre replacement. Again the reverse procedures is allowed when fitting a wheel.

It is envisaged that the main advantage of the invention will be a huge saving in down-time of a vehicle requiring a wheel change. This can amount to large savings when dealing with off-the-road vehicles which are invariably under contract to complete a project to a strict time schedule and are often subject to penalties for non-performance in terms of the contract.

It is anticipated that no more than two operators will be required to move the largest wheel over a level surface. If the vehicle is stranded in tough terrain or soft soil it may be found necessary to lay a portable track down with three shallow metal channels wherein the trolley-wheels may move with ease to effect the operation.

It is also envisaged that the smaller type units will prove extremely popular with truck operators and service personnel. Fleet operators will no doubt install these units at all centers.

When fitting a wheel it is a great advantage to have the wheel mounted on rollers as the problem of alignment of the holes with the wheel studs can be achieved by simply rotating the wheel on the rollers.

It will be appreciated that variations can be made to the embodiment of the invention described above without departing from the scope thereof. In particular the shape, configuration and arrangement of the components of the combination wheel jack and trolley can be changed to suit a particular operation.

## Claims

1. A combination wheel jack and trolley comprising a cradle designed to restrain a wheel, a plurality of rollers attached to the cradle to allow a wheel restrained within the cradle to be rotated in use, adjustment means enabling the cradle to restrain wheels of different sizes, a supporting frame designed to hold the cradle in a desired attitude, two or more trolley wheels attached to the frame enabling the wheel jack and trolley to be movable, and a means whereby a wheel restrained by the cradle can be raised relative to the trolley wheel axle.

2. A combination wheel jack and trolley as claimed in claim 1 in which the cradle has a handle attached thereto, the handle acting, in use, as a lever to move a wheel restrained by the cradle into its raised position.

3. A combination wheel jack and trolley as claimed in claim 2 in which the handle is foldable to a position adjacent the cradle when the combination wheel jack and trolley is transported or stored.

4. A combination wheel jack and trolley as claimed in any one of the preceding claims in which the combination wheel jack and trolley has an hydraulic lifting means to facilitate raising a wheel restrained by the cradle relative to the trolley wheel axle.

5. A combination wheel jack and trolley as claimed in claim 4 in which the hydraulic lifting means applies a lifting force to rollers located towards the operative lower side of the cradle.

6. A combination wheel jack and trolley as claimed in any one of the preceding claims in which the supporting frame has three trolley wheels one of which enables the combination wheel jack and trolley to be steered when moved.

7. A combination wheel jack and trolley as claimed in any one of claims 4 to 6 in which the combination wheel jack and trolley has a prime mover to motorise the support frame and trolley wheels, and also to provide power to the hydraulic lifting means which raises a wheel restrained by the cradle.

8. A combination wheel jack and trolley substantially as herein described with reference to and as illustrated in Figures 1,2 and 3.

9. A combination wheel jack and trolley substantially as herein described with reference to and as illustrated in Figures 4 and 5.
